# EUROPEAN PATENT APPLICATION

(11) **EP 3 626 320 A1**
(43) Date of publication of application: **25.03.2020**
(21) Application number: 19194569.0
(22) Date of filing: 30.08.2019
(51) Int. Cl.: A63F 13/335, A63F 13/77, G06T 1/20, H04L 29/08

(54) **METHOD FOR GAME ADAPTION, TERMINAL, AND COMPUTER-READABLE STORAGE MEDIUM**

(30) Priority: 20.09.2018 CN 201811118583
(71) Applicant: GUANGDONG OPPO MOBILE TELECOMMUNICATIONS CORP., LTD., Wusha, Chang'an Dongguan, Guangdong 523860 (CN)
(72) Inventor: LI, Senlin, Dongguan, Guangdong 523860 (CN)
(74) Representative: Mewburn Ellis LLP

(57) **Abstract**

Implementations of the present disclosure provides a method for game adaption, a terminal, and a computer-readable storage medium. The method for game adaption is applied to a terminal. The method includes the following. A browser-like environment is provided for a mini-game platform (101), where the browser-like environment includes an environment related to game development in a browser environment. When a game is running on the mini-game platform, game codes of the game is processed with the browser-like environment (102). The method may further includes the following. The browser-like environment is updated on the mini-game platform to obtain an updated browser-like environment (103).

## Description

### TECHNICAL FIELD

This disclosure relates to the technical field of terminals, and more particularly to a method for game adaption, a terminal, and a computer-readable storage medium.

### BACKGROUND

Mini-games developed based on a browser environment, such as an HTML5 (H5) game, can be played on-line without downloading the mini-games, and thus the mini-games are widely used on terminals such as smart phones.

At present, when the H5 game is running on the terminal, due to limitation of browser development environment, a browser kernel is needed to parse and execute a JavaScript (JS) file of the H5 game. The H5 game can only be developed in the browser environment, and thus the development of the H5 game is limited.

### SUMMARY

Implementations of the present disclosure provide a method for game adaption, a terminal, and a computer-readable storage medium.

According to a first aspect of the implementations of the present disclosure, a method for game engine is provided. The method includes the following. A browser-like environment is provided for a mini-game platform, where the browser-like environment includes an environment related to game development in a browser environment. When a game is running on the mini-game platform, game codes of the game is processed with the browser-like environment.

According to a second aspect of the implementations of the present disclosure, a terminal is provided. The terminal includes a processor and a memory. The memory stores one or more programs. The one or more programs are configured to be executed by the processor and include instructions operable to execute the operations of the method in the first aspect of the implementations of the present disclosure.

According to a third aspect of the implementations of the present disclosure, a computer readable storage medium is provided. The computer readable storage medium is configured to store computer programs for electronic data interchange. The computer programs are operable with a computer to perform all or part of the operations of the method described in the first aspect of the implementations of the present disclosure.

### BRIEF DESCRIPTION OF THE DRAWINGS

To describe technical solutions of implementations of the present disclosure or the related art more clearly, the following will give a brief description of accompanying drawings used for describing the implementations of the present disclosure or the related art. Apparently, the accompanying drawings described in the following are merely some implementations of the present disclosure. Those of ordinary skill in the art can also obtain other accompanying drawings based on the accompanying drawings without creative efforts.
FIG. 1 is a flow chart illustrating a method for game adaption according to an implementation of the present disclosure.
FIG. 2 is a block diagram illustrating a distribution of a system layer, a bridging layer, and an JS layer according to an implementation of the present disclosure.
FIG. 3 is a flow chart illustrating a method for game adaption according to another implementation of the present disclosure.
FIG. 4 is a block diagram illustrating a device for game adaption according to an implementation of the present disclosure.
FIG. 5 is a block diagram illustrating a terminal according to an implementation of the present disclosure.
FIG. 6 is a block diagram illustrating a terminal according to another implementation of the present disclosure.

### DETAILED DESCRIPTION

In order to enable those skilled in the art to better understand technical solutions of the present disclosure, the technical solutions embodied in implementations of the present disclosure will be described in a clear and comprehensive manner in conjunction with the accompanying drawings. It is apparent that the implementations described herein are merely some of rather than all the implementations of the present disclosure. Based on the implementations of the present disclosure, all other implementations obtained by those of ordinary skill in the art without creative efforts shall fall within the protection scope of the present disclosure.

The terms "first", "second", and the like used in the specification, the claims, and the accompany drawings of the present disclosure are used to distinguish different objects rather than describe a particular order. In addition, the terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that a particular feature, structure, or characteristics described in conjunction with the implementations may be contained in at least one implementation of the present disclosure. The phrase appearing in various places in the specification does not necessarily refer to the same implementation, nor does it refer to an independent or alternative implementation that is mutually exclusive with other implementations. It is expressly and implicitly understood by those skilled in the art that an implementation described herein may be combined with other implementations.

Terminals involved in the implementations of the present disclosure may include various handheld devices, in-vehicle devices, wearable devices, computing devices that have wireless communication functions, or other processing devices connected to a wireless modem, as well as various forms of user equipment (UE), mobile stations (MS), terminal devices, and the like. For simplifying description, the devices mentioned above are collectively referred to as the terminals.

According to an implementation of the present disclosure, a method for game engine is provided. The method includes the following. A browser-like environment is provided for a mini-game platform, where the browser-like environment includes an environment related to game development in a browser environment. When a game is running on the mini-game platform, game codes of the game is processed with the browser-like environment.

The following will describe the implementations of the present disclosure in detail.

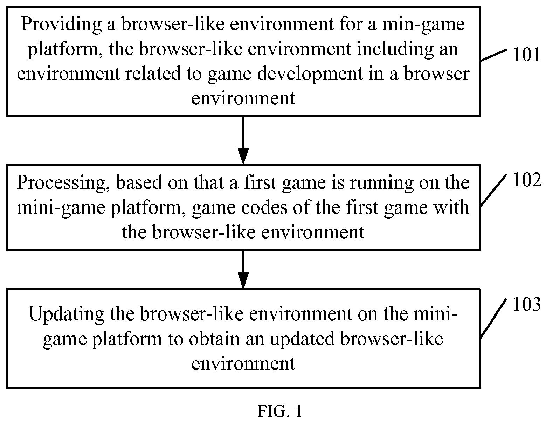

FIG. 1 is a flow chart illustrating a method for game adaption according to an implementation of the present disclosure. As illustrated in FIG. 1, the method for game adaption includes the following.

At block 101, a terminal provides a browser-like environment for a mini-game platform, where the browser-like environment includes an environment related to game development in a browser environment.

In the implementation of the present disclosure, the mini-game platform is a system running on the terminal, and provides an entrance for a mini-game. The mini-game may be developed based on the browser environment, such as an H5 game. Similar to a browser, the mini-game platform has its development environment. Different from the browser, the development environment of the mini-game platform is closer to a system bottom layer. The mini-game platform can encapsulate system capabilities, and the encapsulated system capabilities can be invoked when the mini-game is running. The mini-game running on the mini-game platform can quickly use the system capabilities. Since the browser is not designed only for the mini-game, the browser environment is relatively complex, not only an environment related to web pages (such as display of a page and a tab, and the like) is needed, but also a game-related environment (such as rendering of game pictures and the like) is needed. For the mini-game platform, only the game-related environment is saved, and the other of the browser environment is not included.

At present, a number of games are stilled developed based on the browser, such as the H5 game. When the H5 game is migrated to the mini-game platform from the browser, since the mini-game platform includes the environment related to game development in the browser environment, the H5 game can be quickly migrated to the mini-game platform from the browser without making excessive modifications for the H5 game by the developer of the H5 game.

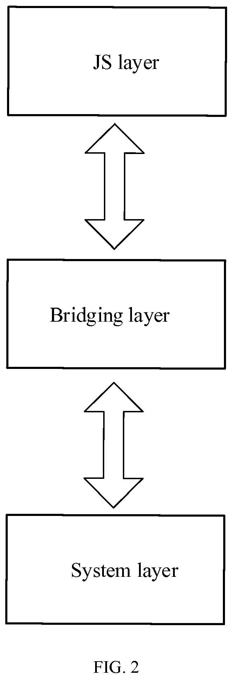

The mini-game platform includes a system layer, a bridging layer, and a JS layer. As illustrated in FIG. 2, the system layer can be understood to be a bottom layer, and is in charge of providing system capabilities related to the bottom layer of the terminal, such as a capability of accessing a memory, a capability of making a call, and so on. A first game may be a mini-game developed based on the browser environment, such as the H5 game. The JS layer can be understood as a top layer, and is in charge of running of the mini-game. Game codes of the mini-game can be run on the JS layer. The bridging layer can be understood to be a middle layer, and is configured to connect the system layer and the JS layer. The bridging layer can encapsulate the capabilities of the system layer to be a uniform application programming interface (API) that can be directly invoked by the JS layer. In the implementation of the present disclosure, the system layer, the bridging layer, and the JS layer can be respectively understood to be a piece of codes. For example, the system layer may be a piece of program codes written in assembly language. The bridging layer may be a piece of program codes written in C++ language. The bridging layer can also be referred to as a C++ layer. The JS layer may be a piece of program codes written in Java language.

In the implementation of the present disclosure, the browser-like environment is provided for the mini-game platform as follows. An adaption layer is provided for the JS layer. and the browser-like environment is provided for the adaption layer. The browser-like environment may be an API corresponding to a document object mode (DOM), an API corresponding to a browser object mode (BOD), and the like. The browser-like environment is a set of browser environments related to game development in the browser environments, and may include multiple browser environments.

For example, the operation at block 101 can be implemented as follows. The terminal provides, for the mini-game platform, a first API corresponding to a game-related DOM, and a second API corresponding to a game-related BOM.

In the implementation of the present disclosure, the DOM is a standard programming interface recommended by World Wide Web Consortium (W3C), and used for processing files written in extensible markup language (XML). The DOM can dynamically access programs and scripts to update content of the DOM. The DOM is an API that can process files written in Hyper Text Markup Language (HTML) and XML.

The BOM is used for describing a layer relationship between browser objects. The BOM provides an object structure that is independent of contents and can be interactive with browser windows. The BOM can pop up a new browser window, move and close a browser window, and change a size of a browser window. The BOM is a guide object that can provide detailed information of the WEB browser. The BOM is a local object that can provide detailed information of a loaded browser page. The BOM is a screen object that can provide detailed information of screen resolution. The BOM can further support Cookies.

The DOM and the BOM are designed based on the browser. If functions of the DOM and the BOM are fully ported to the mini-game platform, some of the functions that are not used by the mini-game are also added to the mini-game platform. In the implementation of the present disclosure, the terminal only provides the game-related DOM and the game-related BOM for the mini-game platform, such that for the H5 game developed based on the browser, the H5 game can be quickly migrated to the mini-game platform, facilitating game developers to quickly use the capabilities of the mini-game platform, and reducing migration cost for the game developers.

At block 102, when a first game is running on the mini-game platform, the terminal processes game codes of the first game with the browser-like environment.

In the implementation of the present disclosure, the game codes of the first game may be JS codes.

For example, the operation at block 102 can be implemented as follows. The terminal processes the game codes of the first game by invoking the first API or the second API.

In the implementation of the present disclosure, when the game codes of the first game is running on the mini-game platform, the terminal can invoke the first AIP or the second API to process the game codes of the first game. Alternatively, the terminal can invoke both the first AIP and the second API to process the game codes of the first game. The first API corresponds to the DOM. The second API corresponds to the BOM.

At block 103, the terminal updates the browser-like environment on the mini-game platform to obtain an updated browser-like environment.

In the implementation of the present disclosure, the terminal can periodically update the browser-like environment on the mini-game platform. Functions of the mini-game that are frequently used in the browser and not owned by the mini-game platform, the functions of the mini-game can be added to the mini-game platform to update the browser-like environment, such that the updated browser-like environment that can be well compatible with the mini-game can be obtained. In the browser-like environment one or more browser environments that are not frequently used by the developers can be removed from the browser-like environment. Thus, it is convenient and quick to migrate the mini-game developed based on the browser to the mini-game platform from the browser platform.

For example, the operation at block 103 can be implemented as follows. (11), the terminal obtains at least one popular browser environment that is used by the mini-game developers and not included in the browser-like environment. (12), the terminal adds, on the mini-game platform, the at least one popular browser environment to the browser-like environment to obtain the updated browser-like environment.

In the implementation of the present disclosure, the popular browser environment refers to a browser environment that is not included in the current browser-like environment but frequently used by the game developers. The terminal can obtain browser environments frequently used by the developers, and determines whether the browser environments frequently used by the developers are all included in the browser-like environment. If not, one or more browser environments not included in the browser-like environment are determined as one or more popular browser environments, where the one or more browser environments are selected from the browser environments frequently used by the developers. On the mini-game platform, the at least one popular browser environment is added to the browser-like environment to obtain the updated browser-like environment. When a frequency of using a browser environment by the game developers within the past period such as the past month exceeds a preset frequency threshold such as 50%, the browser environment is referred to as one browser environment frequently used by the game developers. The preset frequency threshold may be set in advance and stored in a non-volatile memory of the terminal.

For example, the operation at (12) can be implemented as follows. (121), the terminal obtains cumulative number of times of usage of each of multiple browser environments within a first preset period, where the multiple browser environments are used by multiple mini-game developers. (122) the terminal arranges the multiple browser environments to be a sequence according to the cumulative number of times of the usage of each of the multiple browser environments within the first preset period, where the multiple browser environments are used by the multiple mini-game developers. (123), the terminal determines whether, among browser environments arranged before a preset position of the sequence of the multiple browsers, there is at least one browser environment not included in the browser-like environment. (124), if yes, the at least one browser environment is marked as the at least one popular browser environment, where the at least one browser environment is selected from the browser environments arranged before the preset position of the sequence of the multiple browser environment and not included in the browser-like environment.

In the implementation of the present disclosure, the first preset period may be set in advance and stored in the non-volatile memory of the terminal. For example, the first preset period may be set to be the past month. The preset position may be set in advance and stored in the non-volatile memory of the terminal, for example, the preset position may be a tenth position.

For example, the terminal can collect, from various game development platforms, utilization of the browser environments within the past month, where the browser environments are used by the mini-game developers. According to the utilization, the cumulative number of times of usage of each of the browser environments within the past month is determined. All the browser environments used within the past month are arranged to be the sequence according to the cumulative number of times of the usage of each of the browser environments within the past month, to obtain ten browser environments arranged before the tenth position of the sequence. Whether the ten browser environments are all included in the browser-like environment is determined. If not, one or more browser environments that are not included in the browser-like environment are marked as one or more popular browser environments, where the one or more browser environments are selected from the ten browser environments.

For example, the operation at block 103 can be implemented as follows. (21), the terminal obtains at least one unpopular browser environment from the browser-like environment. (22), the terminal removes, on the mini-game platform, the at least one unpopular browser environment from the browser-like environment to obtain the updated browser-like environment.

In the implementation of the present disclosure, the unpopular browser environment refers to a browser environment that is included in the browser-like environment but not frequently used by the game developers. The terminal can obtain, from the browser-like environment, at least one browser environment that is not frequently used by the developers, and determine each of the at least one browser environment that is not frequently used by the developers as one unpopular browser environment. On the mini-game platform, the terminal removes the at least one unpopular browser environment from the browser-like environment to obtain the updated browser-like environment. When a frequency of using a browser environment by the game developers within a past period such as the past month is smaller than a preset frequency threshold such as 1%, the browser environment is referred to as one browser environment not frequently used by the game developers. The second preset frequency threshold can be set in advance and stored in the non-volatile memory of the terminal.

For example, the operation at block 21 can be implemented as follows. (211), the terminal determines whether the browser-like environment includes at least one browser environment, where the cumulative number of times of usage of each of the at least one browser environment within a second preset period is smaller than a preset times threshold. (212), if the at least one browser environment exists, the terminal marks each of the at least one browser environment as one unpopular browser environment, where the cumulative number of times of the usage of each of the at least one browser environment in the browser-like environment within the second preset period is smaller than the preset times threshold.

In the implementation of the present disclosure, the second preset period may be set in advance and stored in the non-volatile memory of the terminal. For example, the second preset period may be set to be the past month. The preset times threshold may be set in advance and stored in the non-volatile memory of the terminal. For example, the preset times threshold may be set to be 2. The second preset period may be the same as or different from the first preset period, and the present disclosure is not limited thereto.

For example, the terminal can collect, from various game development platforms, utilization of browser-like environments used by the mini-game developers within the past month, and determines, according to the utilization, the cumulative number of times of usage of each of the browser-like environments within the past month. If the cumulative number of times of usage of one of the browser-like environments within the past month is smaller than 2, the one of the browser-like environments is marked as one unpopular browser environment.

In the implementation of the present disclosure, the browser-like environment can be provided for the first game, such that the first game can be quickly migrated to the mini-game platform, thus facilitating the game developers to quickly use the capabilities of the mini-game platform, and reducing the migration cost for the game developers. Furthermore, the browser-like environment can be updated to obtain the updated browser-like environment that is well compatible with the mini-game. In addition, it is convenient and quick to migrate the mini-game developed based on the browser to the mini-game platform from the browser platform.

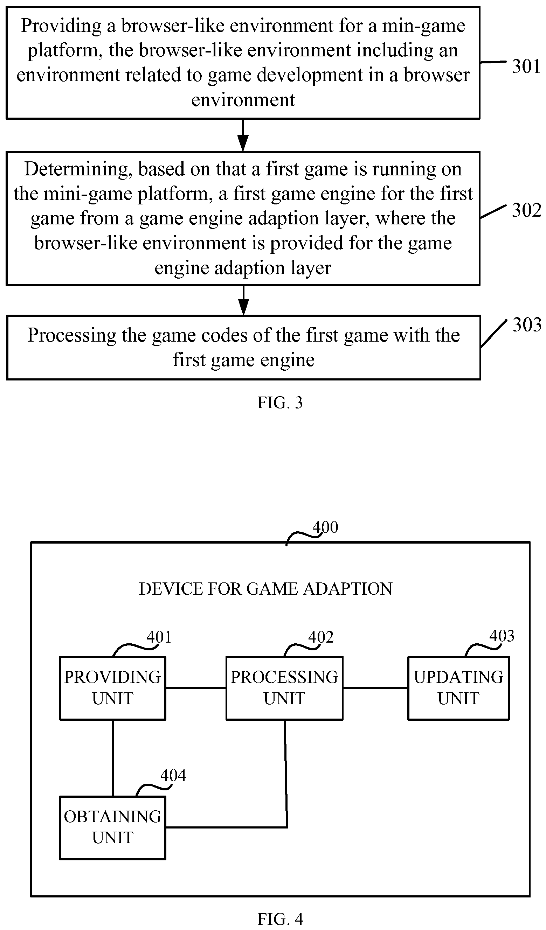

FIG. 3 is a flow chart illustrating a method for game adaption according to another implementation of the present disclosure. As illustrated in FIG. 3, the method for game adaption includes the following.

At block 301, a terminal provides a browser-like environment for a mini-game platform, where the browser-like environment includes an environment related to game development in a browser environment.

In the implementation of the present disclosure, for the operation at block 301, reference can be made to the operations at block 101 illustrated in FIG. 2, and details are not repeated herein.

At block 302, when a first game is running on the mini-game platform, the terminal determines a first game engine for the first game from a game engine adaption layer, where the browser-like environment is provided for the game engine adaption layer.

In the implementation of the present disclosure, the game engine adaption layer may locate on the JS layer. The game engine adaption layer may include multiple game engines. Different game engines can be adapted to different types of mini-games.

The game engines refer to some editable computer game systems that have been written, or refer to core components of some interactive real time image applications. The systems provide game developers with various tools used for writing various games, and aim to help the game developers to write game programs easily and quickly, and thus the game developers need not to start from zero.

When the first game is running, the terminal obtains, from the game engine adaption layer, the first game engine for the first game as follows. The terminal determines a game type of the first game, and determines, according to a correspondence relationship between game types and game engines, a game engine corresponding to the game type of the first game as the first game engine.

In the implementation of the present disclosure, for different games, different game engines can be used. Invoking of the bottom API by different game engines can be separated, thereby realizing a quick and seamless migration of a mini-game to the mini-game platform from the browser.

At block 303, the terminal process the game codes of the first game via the first game engine.

In the implementation of the present disclosure, the terminal processes the game codes of the first game with the browser-like environment, and thus the first game can invoke the API corresponding to the browser-like environment. The terminal process the game codes of the first game via the first game engine, and thus invoking of the bottom API by different game engines can be separated. For all games, the same browser-like environment is used. However, game engines for different games may not be the same.

In the implementation of the present disclosure, the browser-like environment can be provided for the first game, such that the first game can be quickly migrated to the mini-game platform, thus facilitating the game developers to quickly use the capabilities of the mini-game platform, and reducing the migration cost for the game developers. Invoking of the bottom API by different game engines can be separated, thereby realizing a quick and seamless migration of a mini-game to the mini-game platform from the browser.

The foregoing implementations mainly introduces the solution of the implementation of the present disclosure from the perspective of the method process. It can be understood that the terminal includes corresponding hardware structures and/or software modules for performing the respective functions to implement the above functions. Those skilled in the art readily appreciate that the present disclosure can be implemented in hardware or a combination of hardware and computer software according to the elements and algorithms of the various examples described in the implementations disclosed herein. Whether a function is implemented in hardware or a manner of driving hardware by computer software depends on the specific application and design constraints of the solution. A person skilled in the art can use different methods for each particular application to implement the described functions, but such realization should not be considered to be beyond the scope of the present disclosure.

In the implementations of the present disclosure, the terminal can be divided into functional units according to the method implementations. For example, the terminal can be divided into functional units according to various functions, or two or more functions may be integrated into one processing unit. The integrated unit can be implemented in the form of hardware or in the form of a software functional unit. What needs to be illustrated is that the division of the units in the implementation of the present disclosure is illustrative and only a logical function division, and there can be other division manners in actual implementations.

FIG. 4 is a block diagram illustrating a device for game adaption according to an implementation of the present disclosure. The device 400 for game adaption is applied to a terminal. As illustrated in FIG. 4, the device 400 for game adaption includes a providing unit 401, a processing unit 402, and an updating unit 403.

The providing unit 401 is configured to provide a browser-like environment for a mini-game platform, where the browser-like environment includes an environment related to game development in a browser environment.

The processing unit 402 is configured to process game codes of a first game with the browser-like environment when a first game is running on the mini-game platform.

The updating unit 403 is configured to update the browser-like environment to obtain an updated browser-like environment.

For example, the providing unit 401 provides the browser-like environment for the mini-game platform as follows. The providing unit 401 provides, for the mini-game platform, a first API corresponding to a game-related DOM, and a second API related to a game-related BOM.

For example, the processing unit 402 process the game codes of the first game with the browser-like environment as follows. The processing unit 402 processes the game codes of the first game by invoking the first API or the second API.

For example, the updating unit 403 updates the browser-like environment to obtain the updated browser-like environment as follows. The updating unit 403 obtains at least one popular browser environment that is used by mini-game developers and not included in the browser-like environment, and adds, on the mini-game platform, the at least one popular browser environment to the browser-like environment to obtain the updated browser environment.

For example, the updating unit 403 obtains the at least one popular browser environment that is used by the mini-game developers and not included in the browser-like environment as follows. The updating unit 403 obtains cumulative number of times of usage of each of multiple browser environments within a first preset period, where the multiple browser environments are used by multiple mini-game developers. The updating unit 403 arranges the multiple browser environments to be a sequence according to the cumulative number of times of the usage of each of the multiple browser environments within the first preset period, where the multiple browser environments are used by the multiple mini-game developers. The updating unit 403 determines, among browser environments arranged before a preset position of the sequence of the multiple browser environments, whether at least one browser environment not included in the browser-like environment exists. The updating unit 403 marks each of the at least one browser environment as one popular browser environment if the at least one browser environment exists, where the at least one browser environment is selected from the browser environments arranged before the preset position of the sequence of the multiple browser environments.

For example, the updating unit 403 updates the browser-like environment on the mini-game platform to obtain the updated browser-like environment as follows. The updating unit 403 obtains at least one unpopular browser environment from the browser-like environment, and removes, on the mini-game platform, the at least one unpopular browser environment from the browser-like environment to obtain the updated browser-like environment.

For example, the updating unit 403 obtains the at least one unpopular browser environment from the browser-like environment as follows. The updating unit 403 determines whether the browser-like environment includes at least one browser environment, where cumulative number of times of usage of each of the at least one browser environment within a second preset period is smaller than a preset times threshold. The updating unit 403 marks each of the at least one browser environment as one unpopular environment if the at least one browser environment exists, where the cumulative number of times of the usage of each of the at least one browser environment within the second preset period is smaller than the preset times threshold.

For example, the device 400 for game adaption further includes an obtaining unit 404.

The providing unit 401 is further configured to provide a game engine adaption layer for the mini-game platform.

The obtaining unit 404 is configured to obtain, from the game engine adaption layer, a first game engine for the first game.

The processing unit 402 is further configured to process the game codes of the first game via the first game engine.

By means of the device for game adaption as illustrated in FIG. 4, the browser-like environment can be provided for the first game, such that the first game can be quickly migrated to the mini-game platform, thus facilitating the game developers to quickly use capabilities of the mini-game platform, and reducing migration cost for the game developers.

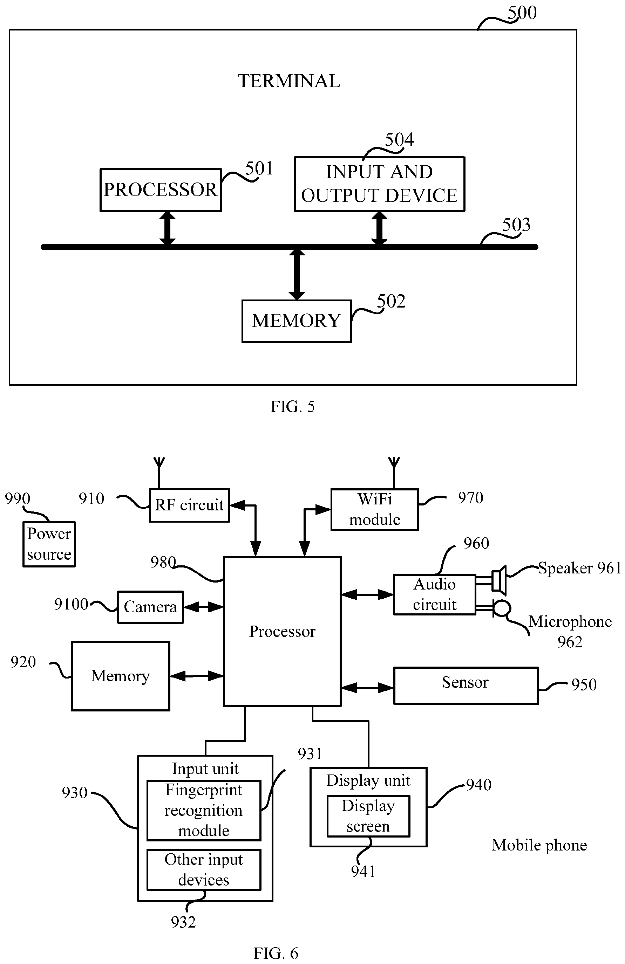

FIG. 5 is a block diagram illustrating a terminal according to an implementation of the present disclosure. As illustrated in FIG. 5, the terminal includes a processor 501 and a memory 502. The terminal 500 further includes a bus 503. The processor 501 and the memory 502 are coupled with each other via the bus 503. The bus 503 may be a Peripheral Component Interconnect (PCI) bus or an Extended Industry Standard Architecture (EISA) bus. The bus 503 may include an address bus, a data bus, a control bus, and so on. For simple description, in FIG. 5 only a thick line is used to indicate the bus 503. The thick line does not indicate that only one bus or only one kind of buses are included. The terminal further includes an input and output device 504. The input and output device 504 may include a display screen, such as a liquid display screen. The memory 502 is configured to one or more programs containing instructions. The processor 501 is configured to invoke the instructions stored in the memory 502 to perform part of or all operations of the methods illustrated in FIG. 1 to FIG. 3.

By means of the terminal illustrated in FIG. 5, the browser-like environment can be provided for the first game, such that the first game can be quickly migrated to the mini-game platform, thus facilitating the game developers to quickly use the capabilities of the mini-game platform, and reducing the migration cost for the game developers.

Embodiments of the present disclosure further provide another terminal. As illustrated in FIG. 6, only parts related to the embodiment of the disclosure are illustrated for the convenience of description. For technical details not described, reference may be made to the method implementations of the present disclosure. The terminal may be any terminal, such as a mobile phone, a tablet computer, a personal digital assistant (PDA), a point of sale terminal (POS), an on-board computer, and the like. The following describes a mobile phone as an example of the terminal.

FIG. 6 is a block diagram illustrating a part of the structure of a mobile phone related to the terminal according to an implementation of the present disclosure. With reference to FIG. 6, the mobile phone may include a radio frequency (RF) circuit 910, a memory 920, an input unit 930, a display unit 940, a sensor 950, an audio circuit 960, a wireless fidelity (Wi-Fi) module 970, a processor 980, a power supply 990, and so on. Those skilled in the art can understand that the structure of the mobile phone illustrated in FIG. 6 does not constitute any limitation on a mobile phone. The mobile phone may include more or fewer components than illustrated, or may combine certain components, or may include different component arrangements.

The following will specifically illustrate various components of the mobile phone in combination with FIG. 6.

The RF circuit 910 is configured to receive and transmit information. Generally, the RF circuit 910 includes, but is not limited to, an antenna, at least one amplifier, a transceiver, a coupler, a low noise amplifier (LNA), a duplexer and the like. In addition, the RF circuit 910 may also communicate with the network and other devices by wireless communication. The above wireless communication may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS) and so on.

The memory 920 is configured to store software programs and modules. The processor 980 is configured to execute various function applications and data processing of the mobile phone by running the software programs and the modules stored in the memory 920. The memory 920 mainly includes a program storage area and a data storage area. The program storage area may store an operating system, application programs required for at least one function and so on. The data storage area may store data created according to use of the mobile phone, and so on. In addition, the memory 920 may include a high-speed RAM, and may further include a non-volatile memory such as at least one disk storage device, a flash device, or other non-volatile solid storage devices.

The input unit 930 may be configured to receive input digital or character information and generate key signal input associated with user setting and function control of the mobile phone. In an implementation, the input unit 930 may include a fingerprint recognition module 931 and other input devices 932. The fingerprint recognition module 931 can collect data of fingerprint of a user thereon. In addition to the fingerprint recognition module 931, the input unit 930 may still include other input devices 932. In an implementation, the other input devices 932 may include, but is not limited to, one or more of a touch screen, a physical keyboard, function keys (such as volume control buttons, switch buttons and so on), a trackball, a mouse, and a joystick.

The display unit 940 is configured to display information input by the user or information provided for the user or various menus of the mobile phone. The display unit 940 may include a display screen 941, and alternatively, the display screen 941 may be in the form of a liquid crystal display (LCD), an organic light-emitting diode (OLED) and so on.

The mobile phone may also include at least one sensor 950, such as a light sensor, a motion sensor, a pressure sensor, a temperature sensor, and other sensors. In an implementation, the light sensor may include an ambient light sensor (also referred to as the light sensor) and a proximity sensor. The ambient light sensor may adjust backlight brightness according to ambient lights to adjust the brightness of the display screen 941. The proximity sensor may turn off the display screen 941 and/or backlight when the mobile phone reaches nearby the ear. As a kind of motion sensor, the accelerometer sensor can detect the magnitude of acceleration in all directions (typically three axes) and when the mobile phone is stationary, the accelerometer sensor can detect the magnitude and direction of gravity; the accelerometer sensor can also identify mobile-phone gestures related applications (such as vertical and horizontal screen switch, magnetometer attitude calibration), or the accelerometer sensor can be used for vibration-recognition related functions (such as a pedometer, percussion) and so on. The mobile phone can also be equipped with a gyroscope, a barometer, a hygrometer, a thermometer, and an infrared sensor and other sensors, which will not be repeated herein.

The audio circuit 960, the speaker 961, the microphone 962 may provide an audio interface between the user and the mobile phone. The audio circuit 960 may convert the received audio data into electrical signals and transfer the electrical signals to the speaker 961; thereafter the speaker 961 converts the electrical signals into sound signals to output. On the other hand, the microphone 962 converts the received sound signals into electrical signals, which will be received and converted into audio data by the audio circuit 960 to output. The audio data is then processed and transmitted by the processor 980 via the RF circuit 910 to another mobile phone for example, or, the audio data is output to the memory 920 for further processing.

Wi-Fi belongs to a short-range wireless transmission technology. With aid of the Wi-Fi module 970, the mobile phone may assist the user in E-mail receiving and sending, webpage browsing, access to streaming media and the like. Wi-Fi provides users with wireless broadband Internet access. Although the Wi-Fi module 970 is illustrated in FIG. 6, the Wi-Fi module 970 is not essential to the mobile phone and can be omitted according to actual needs without departing from the essential nature of the present disclosure.

The processor 980 is the control center of the mobile phone, it connects various parts of the whole mobile phone through various interfaces and lines, runs or executes software programs and/or modules stored in the memory 920, and invokes data stored in the memory 920 to perform various functions of the mobile phone and process data, thereby monitoring the mobile phone as a whole. Optionally, the processor 980 may include one or more processing units; for example, the processor 980 may integrate an application processor and a modem processor, where the application processor handles the operating system, the user interface, the application, and so on, and the modem processor mainly processes wireless communication. It can be understood that the above-mentioned modem processor may not be integrated into the processor 980.

The mobile phone may also include the power supply 990 (e.g., a battery) that supplies power to various components. Preferably, the power supply may be logically connected to the processor 980 via a power management system to enable management of charging, discharging, and power consumption through the power management system.

The mobile phone may further include a camera 9100, where the camera 9100 is configured to take photos and videos, and transmit the photos and videos taken to the processor 980 for processing.

The mobile phone may further include a Bluetooth module, and details are not repeated herein.

In the above embodiments illustrated in FIG. 1, FIG. 2, and FIG. 3, method processes in various steps may be realized based on the structure of the mobile phone.

Implementations of the present disclosure also provide a computer storage medium. The computer storage medium stores computer programs for electronic data interchange. The computer programs are operable with a computer to implement a part of or all operations of any of the above methods for game adaption recorded in the above method implementations.

Implementations of the present disclosure further provides a computer program product. The computer program product includes a non-transitory computer readable storage medium that stores computer programs. The computer programs are operable with a computer to implement a part of or all operations of any of the above methods for game adaption recorded in the above method implementations.

It is to be noted that, for the sake of simplicity, the foregoing method implementations are described as a series of action combinations, however, it will be appreciated by those skilled in the art that the present disclosure is not limited by the sequence of actions described. According to the present disclosure, certain operations may be performed in other order or simultaneously. Besides, it will be appreciated by those skilled in the art that the implementations described in the specification are exemplary embodiments and the actions and modules involved are not necessarily essential to the present disclosure.

In the foregoing implementations, the description of each implementation has its own emphasis. For the parts not described in detail in one embodiment, reference may be made to related descriptions in other implementations.

In the implementations of the disclosure, it can be understood that the apparatus disclosed in implementations provided herein may be implemented in other manners. For example, the device/apparatus implementations described above are merely illustrative; for instance, the division of the units is only a logical function division and there can be other division manners during actual implementations, for example, multiple units or components may be combined or may be integrated into another system, or some features may be ignored, omitted, or not performed. In addition, coupling or direct coupling or communication connection among illustrated or discussed components may be indirect coupling or communication connection among devices or units via some interfaces, and may be electrical connection, or other forms of connection.

The units described as separate components may or may not be physically separated. The components illustrated as units may or may not be physical units, that is, they may be in the same place or may be distributed to multiple network elements. All or part of the units may be selected according to actual needs to achieve the technical solutions of the embodiments.

In addition, the functional units in various implementations of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the operations described in the various implementations of the present disclosure. The memory includes various medium capable of storing program codes, such as a universal serial bus (USB) flash disk, a read-only memory (ROM), a random-access memory (RAM), a movable hard disk, a disk, a compact disc (CD), and the like.

It will be understood by those ordinarily skilled in the art that all or a part of operations of the various methods of the implementations described above may be accomplished by means of a program to instruct associated hardware. The program may be stored in a computer-readable memory, which may include a flash memory, a ROM, a RAM, a disk or a CD, and so on.

The above illustrates the implementations of the present disclosure in detail. The specification employs specific examples to illustrate the principle and implementation manners of the present disclosure. The illustration of the above implementations is just used to help in understanding of the method and core concept of the present disclosure. For a person ordinarily skilled in the art, according to the concept of the present disclosure, changes may be made on the specific implementations and application range. In conclusion, the content of the specification shall not be understood to limit the present disclosure.

## Claims

1. A method for game adaption, the method comprising:
providing (101) a browser-like environment for a mini-game platform, the browser-like environment comprising an environment related to game development in a browser environment; and
processing (102), based on that a game is running on the mini-game platform, game codes of the game with the browser-like environment.

2. The method of claim 1, wherein providing the browse-like environment for the mini-game platform comprises:
providing, for the mini-game platform, a first application programming interface (API) corresponding to a game-related document object mode (DOM) and a second API corresponding to a game-related browser object mode (BOM);
processing the game codes of the game with the browser-like environment comprises:
processing the game codes of the game by invoking at least one of the first API and the second API.

3. The method of any of claims 1 to 2 further comprising:
updating (103) the browser-like environment on the mini-game platform to obtain an updated browser-like environment.

4. The method of claim 3, wherein updating the browser-like environment on the mini-game platform to obtain the updated browser-like environment comprises:
obtaining at least one popular browser environment excluded by the browser-like environment; and
adding the at least one popular browser environment to the browser-like environment to obtain the updated browser-like environment.

5. The method of claim 4, wherein obtaining the at least one popular browser environment comprises:
obtaining cumulative number of times of usage of each of a plurality of browser environments within a first preset period;
arranging the plurality of browser environments to be a sequence according to the cumulative number of times of the usage of each of the plurality of browser environments within the first preset period;
determining, among browser environments arranged before a preset position of the sequence of the plurality of browser environments, whether at least one browser environment excluded by the browser-like environment exists; and
marking, in response to that the at least one browser environment excluded by the browser-like environment exists, the at least one browser environment as the at least one popular environment.

6. The method of any of claims 3 to 5, wherein updating the browser-like environment on the mini-game platform to obtain the updated browser-like environment comprises:
obtaining at least one unpopular environment from the browser-like environment; and
removing the at least one unpopular environment from the browser-like environment to obtain the updated browser-like environment.

7. The method of claim 6, wherein obtaining the at least one unpopular environment from the browser-like environment comprises:
determining whether the browser-like environment comprises at least one browser environment, wherein cumulative number of times of usage of each of the at least one browser environment within a second preset period is smaller than a preset times threshold; and
marking, in response to that the at least one browser environment exists, the at least one browser environment as the at least one unpopular environment.

8. The method of any of claims 1 to 7, wherein processing, based on that the game is running on the mini-game platform, the game codes of the game with the browser-like environment comprises:
determining (302), based on running of the game, a game engine for the game from a game engine adaption layer, wherein the browser-like environment is provided for the game engine adaption layer; and
processing (303) the game codes of the game via the game engine.

9. The method of claim 8, wherein determining, based on the running of the game, the game engine for the game from the game engine adaption layer comprises:
determining a game type of the game; and
determining, according to a correspondence relationship between game types and game engines, a game engine corresponding to the game type of the game as the game engine.

10. A terminal comprising:
a processor (501); and
a memory (502), configured to store one or more programs;
the one or more programs, when executed, being operable with the processor (501) to perform the method of any of claims 1 to 9.

11. A non-transitory computer readable storage medium configured to store computer programs, which, when executed, are operable with a processor to perform the method of any of claims 1 to 9.

12. A device for game adaption, the device comprising:
a providing unit (401), configured to provide a browser-like environment for a mini-game platform, the browser-like environment comprising an environment related to game development in a browser environment;
a processing unit (402), configured to process, based on that a game is running on the mini-game platform, game codes of the game with the browser-like environment.

13. The device of claim 12, wherein:
the providing unit (401) configured to provide the browser-like environment for a mini-game platform is configured to provide, for the mini-game platform, a first application programming interface (API) corresponding to a game-related document object mode (DOM) and a second API corresponding to a game-related browser object mode (BOM);
the processing unit (402) configured to process game codes of the game with the browser-like environment is configured to process the game codes of the game by invoking at least one of the first API and the second API.

14. The device of any of claims 12 to 13 further comprising an updating unit (403) configured to update the browser-like environment on the mini-game platform to obtain an updated browser-like environment.

15. The device of claim 14, wherein the updating unit (403) configured to update the browser-like environment on the mini-game platform to obtain an updated browser-like environment is configured to:
obtain at least one popular browser environment excluded by the browser-like environment; and
add the at least one popular browser environment to the browser-like environment to obtain the updated browser-like environment.
